# EUROPEAN PATENT APPLICATION

(11) **EP 0 703 566 A1**
(43) Date of publication of application: **27.03.1996**
(21) Application number: 94830454.8
(22) Date of filing: 23.09.1994
(51) Int. Cl.: G10L 5/06

(54) **Device for recognizing speech**

(71) Applicant: Oskian, Aurelio, I-20129 Milano (IT)
(72) Inventor: Oskian, Aurelio, I-20129 Milano (IT)
(74) Representative: Righetti, Giuseppe

(57) **Abstract**

The intelligent device for recognizing speech comprises a module (1) for digital conversion of vocal input, modules (3 and 4) for multiple assignation of phonemic values to each entering packet, modules (5) for entraining all phonemically homogeneous packets and well as listening modules (7) of the speech, which, through a lexical verification (6) of the words reconstruct a phrase starting from a transitory fragment, all aimed at determining the characterizing parameters of each spectrum of sequential packets, which are recognized through the phonemic labelling which is not founded on probability selection modes.

## Description

Technologically speaking, the problem of exactly and rapidly recognizing utterances enunciated by a speaker in a noisy room, when that speaker is free to use whatever lexical items and cadences he or she desires, is solved by recognising single phonemes, the most basic form of utterance and quite limited in number, but which in their infinitesimal chains of sequence allow transformation of sound into meaning.

The phoneme-identifying technique, then, is the most logical solution to the problem of picking up speech, but presents several drawbacks in practice, for which reason up to now a preferred technique has been one in which whole words are recognised, and which in order to be recognised have to belong to a previously determined corpus of lexicon. Another technique attempts to recognise a complete phonetic range.

The present invention aims to eliminate the above-mentioned drawbacks relative to the devices at present in use by providing an intelligent device for recognising speech which is based on recognition of phonemes and which by means of a quite simple hardware structure enables recognition of each single word in a fluent delivery. These aims and others besides will better emerge from the description that follows of an intelligent device for recognition of speech, as it is claimed in the first of the following claims as well as in the claims thereafter.

Further characteristics and advantages of the present invention will better emerge from the detailed description that follows, of an intelligent device for recognition of speech, made with reference to the accompanying drawing, which is intended purely as a non-limiting example, of a schematic block diagram, in which the constituent circuit elements of the system constituting the device of the present invention are placed in evidence.

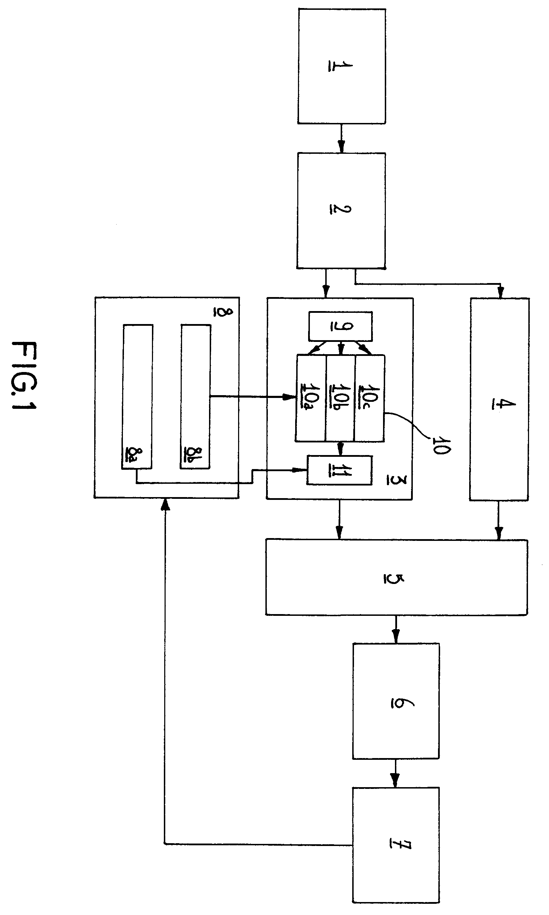

With reference to figure 1, an electric signal from a microphone is picked up by an acquisition module 1, downstream of which an analytic circuit 2 analyses the incoming packets. A further circuit module, an incoming-packet classification and labelling substation 3, branches off from the analytic circuit 2, as does a still further circuit module, a three-level packet flow segmentation subsystem 4 for the packets coming from the acquisiton module. The classification and labelling substation 3 is connected to an automatic cognition refinement block 8, which comprises two functions, a first adaptive module 8a and a second, learning module 8b. Each adaptive module 8a interacts with a module 11 in the classification and labelling substation 3 representing the resultant of three levels of an intermediate block 10, also in the classification and labelling substation 3. The above-mentioned three levels, 10a, 10b and 10c, which subdivide the packets into three areas, originate from a single source 9 incoming from the analytic circuit 2.

In output from the segmentation subsystem 4 is a phonemic cognition unit 5 which also functions as the output of the classification and labelling substation 3. A resultant from the phonemic cognition unit 5 is sent to a lexical extraction and verification module 6 which sends its final result to a presentation and final treatment module 7 of the finalized text. The whole is then sent to the automatic cognition refinement block 8 for final refinement.

After having described the structural characteristics of the invention, the following is a description of the functional and systemic working thereof.

With reference to the acquisition module 1, an input unit receives the electrical signal coming not only from an external microphone but also from any other analogic output device, amplifies it, filters it, samples it and by means of an analog-digital converter operating at 20 KHz with 16-bit precision, produces a resulting digital signal which is transited by a rectangular Hamming window which collects, according to groups of 256 superposed samples, a plurality of informative packets lasting 6.4 ms which constitute an elementary unit of meaning. The elementary unit is copied into an internal magnetic memory in the acquisition module 1 and is located in a queue buffer where all the above-mentioned sample groups are held before being sent to the analytic circuit 2.

The resultant signal thus structured is sent into the analytic circuit 2 which determines the spectral and intensity characteristics of each transiting packet, that is to say the identification parameters thereof. A Fourier transform process is carried out in the analytic circuit 2: more precisely, in the analytic circuit 2 the F.T., or Discrete Fourier Transform and the L.P.C., or Linear Predictive Coding, as well as other processes, are carried out, by means of which the packets are processed and sent by a buffer to the classification and labelling substation 3 where they are stored to be utilized also by the automatic cognition refinement block 8. Obviously the transform method used in the automatic cognition refinement block 8 serves only to evidence the characterizing data in the packet. The resulting signal, as it transits through the classification and labelling substation 3, is classified and labelled, so that the data packet is identified with symbols representing phonemes belonging to the language being used, plus two further symbols respectively denoting background noise and undefined utterances.

The classification and labelling substation 3 utilizes the known concept of finite-state automata. The classification and labelling substation 3 receives in input a vector signal coming from the D.F.T., while it emits in output a vector signal the components of which represent a credibility value catalogued between 0 and 1 for each phonemic symbol: it should be noted that these credibility values are not to be considered as indexes of probability, that is, statistical indexes, but as true and proper value indexes.

The classification and labelling substation 3 is subdivided into three intelligent stages. The first stage, denoted by 9, switches the incoming signal into one of three modules, 10a, 10b or 10c of the intermediate stage 10 on the basis of a distribution of the energy value over three wide bands, namely: a band below 900 Hz, a band comprised between 900 and 3,500 Hz and a band above 3,500 Hz. In the intermediate stage 10, the three modules constituting 10a, 10b and 10c correspond to the three above-specified fields. The intermediate stage 10 comprises n decision trees having final branches containing a complete set of phonemic symbols. The functioning order is as follows: the input, directed into one of the modules 10a, 10b or 10c of the intermediate stage 10, follows the first tree and if the outcome is a credibility value which is greater than a determined threshold, say 0.9, the symbol is outputted; otherwise the symbol considered most credible is saved in a buffer in the classification and labelling substation 3 and the following tree is addressed. If after having attempted all of the trees a phonemic symbol with a satisfactory credibility value has still not yet been obtained, the thus-termed chaining of output phonemic symbols from all of the branches accumulated in the buffer is activated, forming a code which is passed on to the third stage 11 of the classification and labelling substation 3, where labelling is performed, that is, the identifying of each phonemic symbol achieved by means of an ID3-type algorhythm.

Each tree is constructed starting from a packet memory obtained by dictation of a considerable number of speech units. Each packet is labelled automatically if the dictated utterances are pure vowels or simple syllables, like CV for example, while the packets are manually labelled if forming part of complete words. The memory is question contains several million packets. From these samples the most frequent label is selected, and using statistical methods a determination of the discrete characteristics of the phonemic symbol is made in relation to the rest of the memory contents. The first node of the tree is constituted by the discriminants formulated in rule-form. The most frequent new symbol is chosen and the above-described procedure is repeated. Once all of the phonemic symbols have been used up the result wil be a tree in which one side is open while the other side is made up of terminal branches: at each of the nodes the tree contains rules expressing limitations on the distribution of energy on variable frequency bands. At this point it becomes necessary to specify the exact utilization of the D.F.T. on the data.

Normally in the prior art reduction of D.F.T. data is of the same type for all packets. Instead, in the present device parameters are used which depend, as explained above, on the node of the tree by which the parameters are calculated one by one, or in other words identified. To carry out the assignation of the credibility values, the start point is a decision tree which at the origin, being deterministic, assigns to each phonemic output signal a credibility of 1. Since the sample memory, though vast, is incomplete, and furthermore the variability of the speech utterance, the manual and automatic labelling of the packets in any case contains errors, it is better to consider all wrong results in the decision tree. In order to keep account of the output errors a start vector is taken in real numbers along as many positions as there are symbols with 1 values in the position of the identified symbol and with a 0 value in other positions. In this way 1 identifies the phonemic symbol deterministically. The subdivision of the three stages of the intermediate stage 10 enables free dictation and subsequent correction of any inputting phoneme. First there is an initial correction and thereafter a refining, that is a reduction of the credibility index of the identified branch and at the same time, in the same branch the credibility index is no longer 0 but increases proportionally to the incidence of frequency in the same branch. The packet, now with the corrected label, is saved in a special register which will be used to construct a new tree when a level of reliability has fallen below a minimum level, considered unacceptable. Obviously the classification and labelling substation 3 as herein described is a dedicated microchip or a plurality of single chips all having the defined aim.

Obviously in the intermediate stage 10 there can be three chips, each dedicated to a single stage, and a similar chip can be utilized for each decision tree. It is important to note that multiple chip utilization guarantees realtime response for the whole device.

On outputting from the analytic circuit 2 the signal allows for three levels of segmentation in the segmentation subsystem 4 of the train of packets on the basis of the energy level of the packets. A first segmentation level identifies the identifies the group of packets comprised between two natural silences. A second segmentation level identifies a sharp rise in intensity, while a third level identifies homogeneous and contiguous packets having an evergy variation which does not rise above about 20%. Thus at the first level the pauses due for example to speaker breathing or expression idiosyncrasies are interpreted. Also, coughs in the audience or other such noises can be identified, but not a discrete phoneme in a single word, as a lexical verification can take place when single words are picked up but only after a treatment of a segment of the above type has been performed. The second segmentation level is activated by determining within the larger segments any sharp leaps in intensity, that is when the relationship between the energies and the contiguous packets is not below three intensity levels or more. These segments represent syllables, single guttural or dental type phonemes, but not parts of a single phoneme. The third level of segmentation can sometimes contain an entire phoneme, or it can be a transition segment which in its first part contains fragments of a phoneme and in its second part contains a fragment of another phoneme, but which does not contain fragments of more than two phonemes. These segmentation constraints then allow, during the reprocessing process, a grouping of labels in accordance with various fields of possiblity, and in any case the segmentation subsystem 4 is realized by utilizing comparison circuits.

In output from the classification and labelling substation 3 and the segmentation subsystem 4 respective signals are sent to the phonemic cognition unit 5. This, on the basis of the identified segmentation level constraints, groups together packets labelled with the same phonemic symbol and links up the homogeneous segments of the phoneme. The phonemes are subjected to filtration procedures: for example, speech idiosyncrasies leading to displacement of a phoneme on to a following word, doubled-up consonants, slurs and so on are eliminated and a check is made on the sequential compatibility of phonemes.

Thus we can summarize by stating that in the phonemic cognition unit 5 impurities are removed. If the resultant is a single symbol for the identified segment, its labelling details remain unchanged, while if two symbols are obtained the segment is divided into two segments in a same class, but with a different phonemic symbol. By linking these homogeneous segments, those referring to classic phonemes are obtained. This verification is carried out by realizing the sequential compatibility. Interchangeable phonemes, due to dialect or idiolect, are substituted with classic pronunciations deriving from a received pronunciation.

When the resultant signal has been sent in output from the phonemic cognition unit 5, it is processed by the lexical extraction and verification module 6. In this latter unit, first it is decided whether any further check is needed, or the words are checked against a preexisting sound dictionary, not only in order to be recognized, but also to be verified: when the lexical extraction and verification module 6 cannot verify satisfactorily, the words appear evidenced when visualized.

Specialistic lexical lists are used for speeches where such a restricted corpus of vocabulary is to be used. Briefly, in the lexical extraction and verification module 6 three parameters are referred to: the segmentation of an intermediate level, the prosodic analysis and the syllable analysis, which represent three different alternative control options.

From the first of these, segmentation based on sudden leaps, indications relating to the startpoint of the words are obtained, while such analysis is not useful for endpoints of words. The prosodic analysis is intended for this purpose. Once the string of characters has been extracted, an automatic procedure is employed to order them into syllables. The syllables are double-controlled: firstly, it is decided whether they are admissible, and secondly which position or positions they can occupy. Then it is decided whether a lexical check is necessary, which can be carried out in three ways: a first, where no control is made as the speech is expounding a specialistic argument, or because the words in input are all recognizable; a second, where the words are recognizable; and a third where words extraneous to the existing lexical records are verified.

After the lexical extraction and verification module 6 treatment, which includes a chip and a comparison memory, the signal passes to the presentation and final treatment module 7, where the entire resulting text is dealt with, or in other words where the phonetic information is translated into written language. Obviously there is a visualization mode and an edit mode. There is no punctuation in this module 7, but only intermediate spaces, as words such as "period" or "comma" and so on are not provided. Selected sections of the speech can also be listened to if necessary in this part of the device. From the presentation and final treatment module 7, which is of the office automation type, the text is sent to the automatic cognition refinement block 8 which has the internal function, through the learning function 8b, of reconsidering the impurities in the phonemic cognition unit 5 and refining them, thus modifying the credibility indices of the classification and labelling substation 3, and at the same time analyzing the corrections of the user. The second part, that is block 8a, enables the user to correct manually as is his wont.

The learning function 8b is irreversible, while function 8a is reversible, functioning like a reset command.

Thus the invention achieves its aim: by means of a sequence of processing stages present in the various modules, and based on the phonemic symbols, it is possible to classify, label, purify and correct entire phonemes originating from words, phrases, and utterances, without user intervention, even when the vocabulary range used is numerically unlimited. Obviously, further augmentation and modification of the circuits could be effected, all in line with the invention concept expounded herein.

## Claims

1. An intelligent device for recognising speech, comprising a plurality of modules of known type, constituted by an acquisition module (1) for data input, an analytic circuit (2) for processing of data connected with a classification and labelling substation (3) of phonemic symbols and a segmentation subsystem (4) of energy levels of phonemes, a phonemic cognition unit (5), as well as a lexical extraction and verification module (6) of prosodically homogeneous phonemes, said phonemes being refinable by means of an automatic cognition refinement block (8) permitting corrections to be made on strings of words grouped in homogeneous packages; Fourier transform method being used to discriminate in all functions.

2. An intelligent device for recognising speech as in claim 1, characterised in that packets in input are labelled phonemically and not through a selection based on probability, by means of a labelling circuit module (11).

3. An intelligent device for recognising speech as in claim 1, characterised in that phonemic recognition is achieved through a reduction in data on multiple segmentation levels based on energy levels, utilizing an energy comparison circuit.

4. An intelligent device for recognising speech as in claim 1, characterised in that the device comprises a presentation and final treatment module (7) of phonemically homogeneous packets for generating a phonemically limited string subdivided into words.
